# FASCICULE DE BREVET EUROPEEN

(11) **EP 3 740 388 B1**
(45) Date de publication et mention de la délivrance du brevet: **08.03.2023**
(21) Numéro de dépôt: 19700413.8
(22) Date de dépôt: 15.01.2019
(51) Int. Cl.: B60J 1/17

(54) **DISPOSITIF DE GUIDAGE D'UNE VITRE COULISSANTE, PORTE VITRÉE DE VÉHICULE ÉQUIPÉE DE CE DISPOSITIF ET VÉHICULE ÉQUIPÉ D'UNE TELLE PORTE**
VORRICHTUNG ZUM FÜHREN EINES SCHIEBEFENSTERS, MIT DIESER VORRICHTUNG AUSGESTATTETE VERGLASTE FAHRZEUGTÜR UND MIT EINER SOLCHEN TÜR AUSGESTATTETES FAHRZEUG
DEVICE FOR GUIDING A SLIDING WINDOW, GLAZED VEHICLE DOOR EQUIPPED WITH SAID DEVICE, AND VEHICLE EQUIPPED WITH SUCH A DOOR

(30) Priorité: 18.01.2018 FR 1850406
(43) Date de publication de la demande: 25.11.2020
(73) Titulaire: Cooper-Standard France, 35503 VITRÉ CEDEX (FR)
(72) Inventeur: VEILLE, Jean-Marc, 35000 RENNES (FR); GARINO, Thierry, 35500 TAILLIS (FR); GRAS, Patrice, 35500 SAINT M'HERVE (FR)
(74) Mandataire: Regimbeau
(86) Numéro de dépôt international: PCT/EP2019/050926
(87) Numéro de publication internationale: WO 2019/141675

(56) Documents cités:
- EP-A1- 0 376 831
- WO-A1-2017/157493
- DE-A1- 2 952 019
- DE-A1-102012 001 644
- FR-A1- 2 518 025
- FR-A1- 2 535 776

## Description

### DOMAINE TECHNIQUE GENERAL

L'invention se situe dans le domaine des véhicules automobiles.

La présente invention concerne un dispositif de guidage d'une vitre coulissante dans une porte d'un véhicule automobile, une porte vitrée à vitre affleurante d'un véhicule automobile équipée d'un tel dispositif et enfin, un véhicule comprenant une telle porte.

### ETAT DE L'ART

Dans les véhicules haut de gamme, il est courant que les portes ne présentent pas un cadre solidaire de la porte autour de la vitre. De telles portes sont dites "sans cadre" (ou "frameless" selon la terminologie anglaise). Lorsque la porte est fermée et que la vitre est en position haute fermée, la vitre affleure au niveau du pied milieu.

Dans les autres véhicules, la porte comprend un cadre. Toutefois, pour répondre aux attentes des consommateurs, des constructeurs et des stylistes, l'aspect esthétique de ce cadre est étudié pour se rapprocher le plus possible de l'esthétique d'une porte "frameless". Dans ce cas, la vitre est montée affleurante par rapport à un appliqué qui est lui-même fixé sur l'une des montants du cadre.

On connaît ainsi d'après le document FR 3 041 905, un dispositif vitré, destiné à être assemblé avec une porte de véhicule automobile. Ce dispositif comprend un panneau vitré mobile entre une position d'obturation et au moins une position d'ouverture et deux rails de guidage en coulissement dudit panneau, ces rails étant reliés entre eux par une traverse supérieure. Le panneau vitré porte, sur sa face orientée vers l'intérieur du véhicule, un patin de guidage, monté coulissant à l'intérieur dudit rail de guidage. Ces rails sont réalisés en matière plastique ou en aluminium mais de préférence dans ce dernier matériau. Le panneau vitré de cette porte est affleurant, c'est-à-dire qu'aucun élément du cadre de la porte entourant ce panneau vitré ne fait saillie vers l'extérieur du véhicule, par rapport au plan de ce panneau.

On connaît également le document FR 2 535 776 A1, un dispositif vitré, destiné a être assemblé avec une porte de véhicule automobile.

Un tel rail de guidage est couteux, notamment lorsqu'il est réalisé en aluminium. De plus, ce dispositif vitré se présente sous forme d'un module complet à assembler dans une porte et son montage est différent d'un montage standard. Il peut alors être nécessaire de modifier certaines étapes sur la chaîne de fabrication, ce que les fabricants automobiles souhaitent généralement éviter.

On connaît également d'après le document US 8701349, un dispositif de guidage d'une vitre coulissante et affleurante d'une porte de véhicule. Le patin de guidage fixé sur la face intérieure de la vitre coulisse dans un rail de guidage au contact de trois lèvres d'étanchéité. Toutefois, ces trois lèvres peuvent se déformer compte-tenu de leur forme et de la forme du rail de guidage et ne garantissent pas un guidage parfait du patin, qui peut ainsi bouger selon l'axe x longitudinal du véhicule et selon l'axe y transversal du véhicule.

Enfin, on connaît d'après le document US 2013/0061529, un autre dispositif de guidage dans lequel un patin à tête ovale coulisse dans un rail de guidage à cavité ovale avec un certain jeu entre eux pour éviter le blocage du patin. De ce fait, là encore le patin peut bouger selon l'axe x longitudinal du véhicule et selon l'axe y transversal du véhicule.

### PRESENTATION DE L'INVENTION

L'invention a pour but de résoudre les inconvénients précités de l'état de la technique.

L'invention a notamment pour but de proposer une solution technique qui permette d'avoir une porte vitrée avant ou arrière de véhicule, munie d'un cadre mais présentant l'aspect visuel d'une porte sans cadre, (c'est-à-dire à vitre affleurante par rapport au pied milieu) et qui soit moins coûteuse, plus simple à fabriquer et à installer dans n'importe quelle porte de véhicule que les dispositifs de l'état de la technique.

Un autre objectif de l'invention est d'avoir un dispositif de guidage qui permette d'améliorer le maintien de la vitre selon l'axe x longitudinal du véhicule et selon l'axe y transversal du véhicule de façon à ce que la vitre soit toujours affleurante par rapport à l'appliqué fixé sur le montant de la porte ou avec un très faible désaffleurement, de préférence inférieur à 1 mm.

Un tel dispositif doit également permettre d'obtenir un bon isostatisme de la vitre et simultanément une adaptation du rail de guidage sur toutes formes galbées d'un cadre de porte et une adaptation vis-à-vis de la dispersion et des tolérances de fabrication d'un même type de porte.

Enfin, le dispositif de guidage ne doit pas nécessiter de modifier le cadre de la porte sur laquelle il est monté, de sorte qu'un constructeur peut monter indifféremment sur un cadre donné, le dispositif de guidage conforme à l'invention ou un autre.

A cet effet, l'invention concerne un dispositif de guidage d'une vitre coulissante dans une porte vitrée à vitre affleurante d'un véhicule automobile selon la revendication 1.

Grâce à ces caractéristiques de l'invention, le rail de guidage s'adapte aux différents galbes du montant de la porte, tout en permettant le maintien du patin de guidage selon l'axe longitudinal x et transversale y du véhicule et son guidage. En outre, ce rail est simple à produire et est ensuite découpé et assemblé dans les montants de la porte. La porte est donc moins coûteuse..

Enfin, la flexibilité du joint favorise le réglage de son positionnement dans le montant de la porte.

Selon d'autres caractéristiques avantageuses et non limitatives de l'invention, prises seules ou en combinaison :
- ledit rail de guidage est réalisé dans un matériau élastomère caoutchouc et/ou élastomère thermoplastique,
- ledit rail de guidage est réalisé dans un matériau choisi parmi un composé à base de graphite, un composé à base de bisulfure de molybdène, l'éthylène-propylène-diène monomère EPDM, le polyacétal, le polyamide, le polytétrafluoroéthylène PTFE, le polyéthylène à ultra haut poids moléculaire, le polypropylène ou une polyoléfine,
- ledit patin de guidage est réalisé dans un matériau élastomère thermoplastique ;
- ledit patin de guidage est réalisé dans un matériau choisi parmi un composé à base de graphite, un composé à base de bisulfure de molybdène, le polyacétal, le polyamide, le polytétrafluoroéthylène PTFE, le polyéthylène à ultra haut poids moléculaire, le polypropylène ou une polyoléfine ;
- la paroi interne de la cavité cylindrique du rail de guidage est recouverte d'un revêtement intérieur à faible coefficient de frottement favorisant le coulissement ;
- le rail de guidage et son revêtement intérieur sont co-extrudés ;
- le patin de guidage comprend deux têtes de guidage coaxiales selon ledit axe de la tête de patin ;
- chaque tête de guidage est en forme ovoïde dont le grand axe correspond audit axe patin de la tête de patin ;
- les parties planes de l'une des deux têtes de guidage sont décalées angulairement par rapport aux parties planes de l'autre tête ;
- ledit rail de guidage comprend au moins un organe de fixation sur le montant, tel qu'une languette longitudinale s'étendant tout le long dudit rail de guidage, cet organe étant conformé pour pouvoir être reçu dans une rainure longitudinale du montant du cadre de la porte.

L'invention concerne également une porte vitrée à vitre affleurante de véhicule automobile, comprenant un caisson qui se prolonge par un cadre, ce cadre et ce caisson délimitant ensemble une ouverture, ladite porte comprenant également une vitre coulissante, mobile entre une position fermée dans laquelle elle obture complètement ladite ouverture et une position ouverte dans laquelle elle est au moins partiellement engagée dans ledit caisson et dégage au moins partiellement ladite ouverture, ledit cadre comportant deux montants avant et arrière reliés entre eux par une traverse.

Conformément à l'invention, cette porte comprend un dispositif de guidage d'une vitre tel que précité, ledit patin de guidage est fixé sur la vitre affleurante de ladite porte, en ce que le rail de guidage est monté dans l'un desdits montants de façon que ladite fente longitudinale débouche en direction de ladite ouverture et en ce que ledit rail et ledit patin sont dimensionnés et positionnés de façon que la vitre soit affleurante ;

Selon un mode de réalisation, il s'agit d'une porte avant de véhicule et par le fait que ledit rail de guidage est fixé sur le montant arrière du cadre.

Selon un autre mode de réalisation, il s'agit d'une porte arrière de véhicule et par le fait que ledit rail de guidage est fixé sur le montant avant du cadre.

L'invention concerne également un véhicule automobile muni d'au moins une telle porte vitrée.

### PRESENTATION DES FIGURES

D'autres caractéristiques et avantages de l'invention apparaîtront de la description qui va maintenant en être faite, en référence aux dessins annexés, qui en représentent, à titre indicatif mais non limitatif, des modes de réalisation possibles.

Sur ces dessins :
- la figure 1 est une vue schématique éclatée d'une porte de véhicule selon l'invention,
- la figure 2 est une vue de côté et de l'extérieur d'une partie des portes avant et arrière d'un véhicule conforme à l'invention,
- la figure 3 est une vue en coupe transversale prise selon le plan de coupe passant par la ligne III-III de la figure 2,
- la figure 4 est une vue en coupe transversale prise selon le plan de coupe passant par la ligne IV-IV de la figure 2,
- la figure 5 est une vue en coupe transversale d'une variante de réalisation du patin de guidage de la figure 3,
- les figure 6 et 7 sont des vues en perspective d tronçons de deux rails de guidage conformes à l'invention,
- les figures 8A et 8B sont des vues en perspective selon deux orientations différentes du patin de guidage de la vitre de la figure 3, et
- la figure 9 est une vue en coupe transversale prise selon le plan de coupe passant par la ligne VIII-VIII de la figure 2.

### DESCRIPTION DETAILLEE DE L'INVENTION

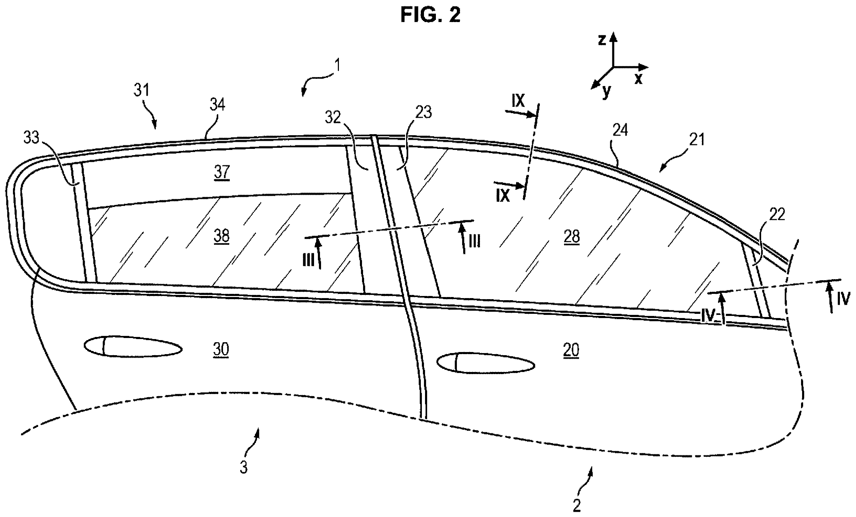

En se reportant à la figure 2, on peut voir une partie latérale d'un véhicule 1, qui comprend une porte avant 2 et une porte arrière 3.

La porte avant 2 comprend un caisson 20, qui se prolonge à sa partie supérieure par un cadre 21.

Ce cadre 21 comprend deux montants, à savoir un montant avant 22 et un montant arrière 23 (quand on considère le sens de déplacement en marche avant du véhicule), reliés entre eux par une traverse 24. Les deux montants 22 et 23 s'étendent verticalement ou sensiblement verticalement en fonction de la forme du cadre.

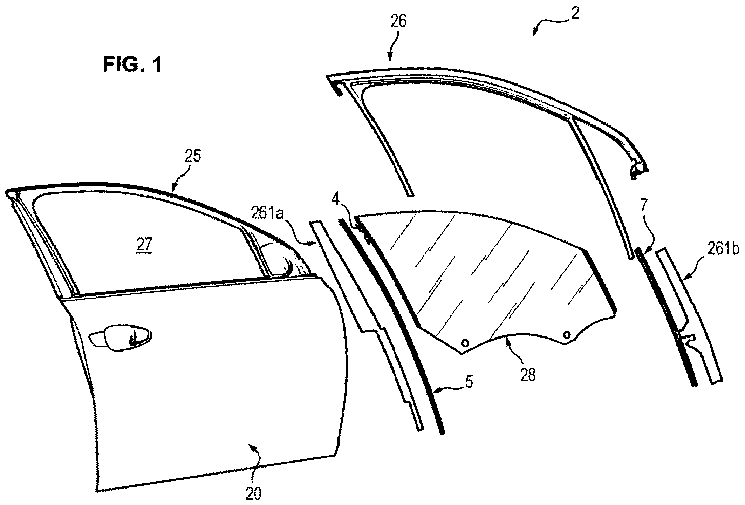

Plus précisément, et comme on peut le voir sur la figure 1, le cadre 21 se compose d'un encadrement 25 en tôle métallique, qui est une pièce de la carrosserie soudée au caisson 20 et d'un appliqué 26, rapporté sur le côté extérieur de cet encadrement 25.

Le cadre 21 délimite avec le caisson 20, une ouverture 27 visible uniquement sur la figure 1. La porte avant 2 comprend également une vitre 28 coulissante, mobile entre une position fermée, dans laquelle elle obture complètement l'ouverture 27 et une position ouverte.

Dans la position fermée, son bord inférieur reste inséré dans l'épaisseur du caisson 20, tandis que son bord supérieur vient au contact d'un joint d'étanchéité de vitre, qui est solidaire de la traverse 24.

Dans la position ouverte, la vitre 28 est au moins partiellement engagée dans le caisson 20 et dégage au moins partiellement l'ouverture 27. Il existe donc de multiples positions ouvertes.

De façon similaire, et qui ne sera pas décrite en détails, la porte arrière 3 comprend un caisson 30, un cadre 31 comprenant un montant avant 32 et un montant arrière 33, reliés entre eux par une traverse 34. Le cadre 31 est également composé d'un encadrement en tôle métallique sur lequel est rapporté un appliqué, mais ceux-ci ne sont pas visibles sur les figures. Le caisson 30 et le cadre 31 délimitent ensemble une ouverture 37. La porte arrière 3 comprend également une vitre 38.

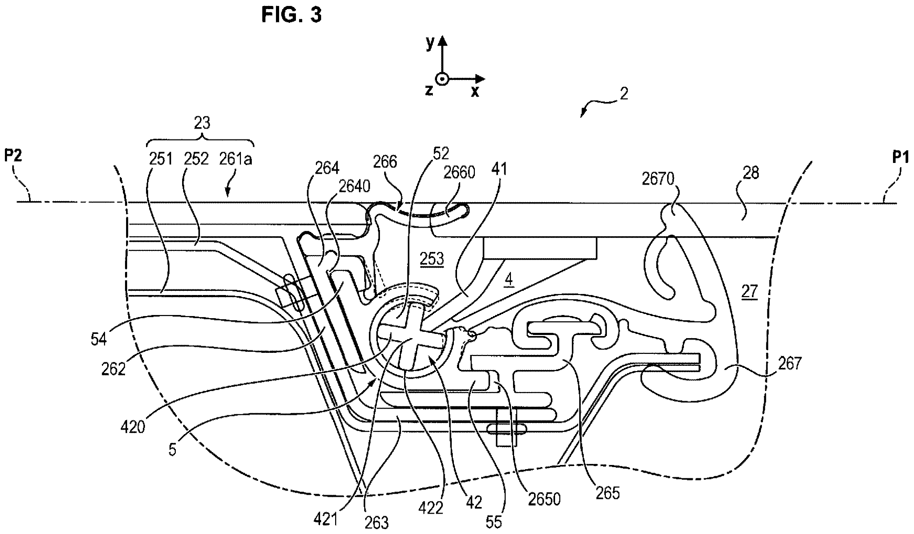

En se reportant à la figure 3, qui représente une section selon la ligne III-III de la figure 2, on peut voir le montant arrière 23 et la vitre 28 de la porte avant 2.

Le montant arrière 23 comprend de façon classique un premier profilé structurel dit "interne"251, un deuxième profilé structurel dit "médian" 252 qui font partie de l'encadrement en tôle 25 et un troisième profilé 261a, dit « enjoliveur de pied milieu », et qui fait partie de l'appliqué 26.

L'extérieur du véhicule se trouve à la partie supérieure de la figure 3 et l'intérieur de l'habitacle à la partie inférieure de cette même figure.

Les profilés structurels 251 et 252 présentent une partie incurvée vers l'intérieur de l'habitacle, de façon à ménager entre la vitre 28 et ces parties incurvées, un espace 253 qui sert à recevoir les moyens de guidage de la vitre qui seront décrits ultérieurement.

L'appliqué 261a se prolonge par une aile qui comprend une partie 262, dite "transversale", car s'orientant en direction de l'intérieur du véhicule et qui se prolonge par une partie dite « longitudinale » 263, car s'étendant sensiblement parallèlement à l'axe longitudinal du véhicule.

Un premier profilé de support 264 est fixé sur la partie transversale 262 de l'aile de l'appliqué, par exemple par vissage. Ce premier profilé de support 264 présente une rainure longitudinale 2640, qui s'étend de préférence sur toute la hauteur du montant arrière.

Un deuxième profilé support 265 est fixé sur la partie longitudinale 263 de l'aile de l'appliqué. Il présente une rainure longitudinale 2650 qui s'étend de préférence également sur toute la hauteur du montant arrière 212.

La rainure 2640 débouche en direction de l'intérieur de l'habitacle et la rainure 2650 débouche en direction de l'arrière de l'habitacle.

Un premier joint d'étanchéité de vitre 266 est fixé entre l'extrémité avant de l'appliqué 261a et le premier profilé support 264. Ce joint d'étanchéité 266 se présente sous forme d'une bande continue et comprend une lèvre longitudinale 2660 qui appuie de façon étanche sur la tranche verticale de la vitre 28.

Un deuxième joint d'étanchéité de vitre 267 est fixé sur l'extrémité avant des profilés structurels251 et 252. Il se présente sous forme d'une bande continue et comprend une lèvre 2670 destinée à glisser contre la face intérieure de la vitre 28.

Au moins un patin de guidage 4 est fixé sur la face intérieure de la vitre 28.

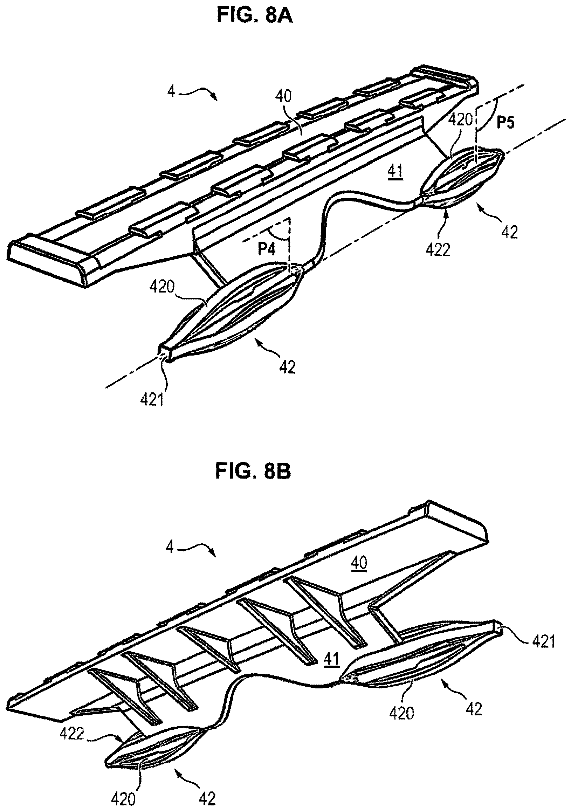

Un exemple de réalisation de ce patin de guidage 4 est représenté sur les figures 8A et 8B. Le patin 4 comprend une plaque d'appui 40 destinée à être fixée, de préférence par collage, sur la face intérieure de la vitre 28. Cette plaque 40 se prolonge sur sa face arrière (orientée vers l'intérieur de l'habitacle) par un pied 41, puis par au moins une tête, de préférence deux têtes 42. De préférence, la tête 42 a une forme d'ogive et présente en section transversale la forme d'une croix, comme cela apparaît mieux sur la figure 3.

Ce patin de guidage 4 est réalisé dans un matériau rigide, de préférence en matériau élastomère thermoplastique. A titre d'exemple, ce matériau peut être choisi parmi un composé à base de graphite, un composé à base de bisulfure de molybdène, le polyacétal, le polyamide, le polytétrafluoroéthylène PTFE, le polyéthylène à ultra haut poids moléculaire, le polypropylène ou une polyoléfine. Ces matériaux peuvent être chargés ou non.

Comme cela apparaît mieux sur la figure 3, la tête 42 comprend quatre parties planes 420 qui s'étendent radialement depuis l'axe central de la tête 421, dit "axe de la tête du patin". Elles sont réparties uniformément autour de celui-ci, ici à 90° les unes des autres.

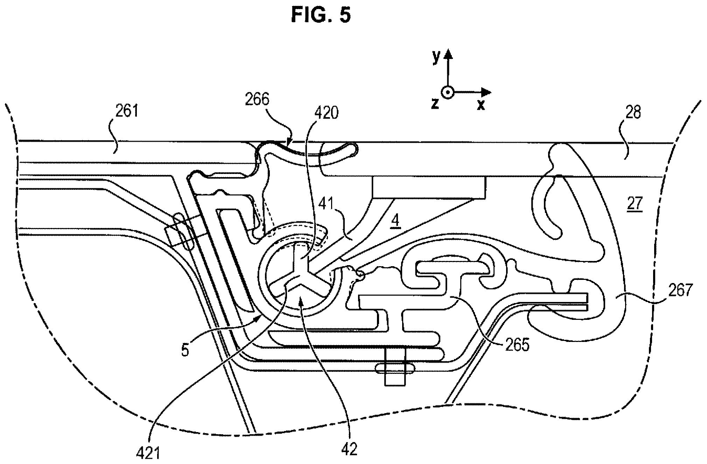

Sur la variante de réalisation de la figure 5, la tête 42 comprend trois parties planes 420, réparties à 120° les unes des autres.

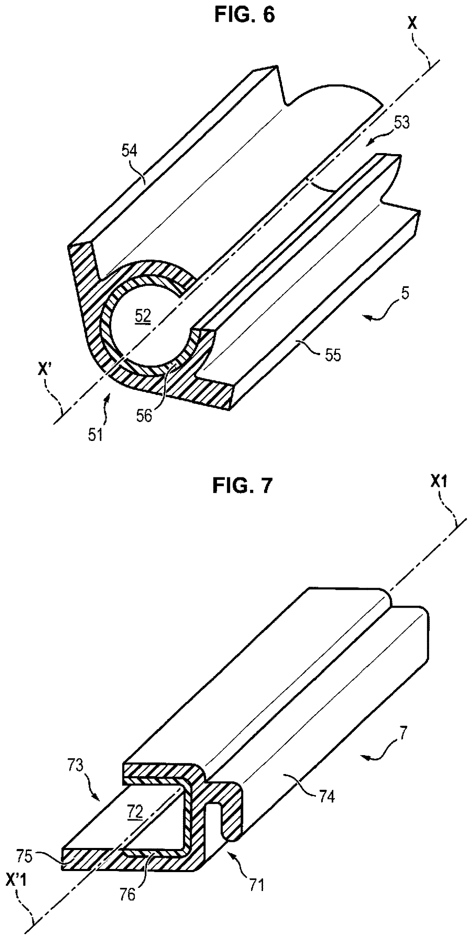

La ou les tête(s) 42 du patin de guidage 4 sont destinées à être reçues dans un rail de guidage 5, qui va maintenant être décrit plus en détail en liaison avec la figure 6.

Ce rail de guidage 5 se présente sous forme d'un profilé continu d'axe longitudinal X-X'. Ce rail de guidage 5 comporte sur toute sa longueur une partie concave 51 dont la cavité centrale 52 débouche sur un orifice 53. En section transversale, cette cavité 52 présente la forme d'un "C". La cavité 52 est donc cylindrique d'axe X-X' et l'orifice 53 constitue une fente longitudinale.

Ce rail de guidage 5 est également muni de préférence d'au moins un organe de fixation, de préférence de deux, par exemple deux languettes longitudinales 54, 55 qui s'étendent tout le long du rail de guidage 5.

De préférence, ces languettes s'étendent depuis la zone de fond de la cavité 52, c'est-à-dire la zone située à l'opposé de l'orifice 53. Elles sont par exemple situées à angle droit ou sensiblement à angle droit l'une de l'autre.

Ces languettes 54 et 55 sont conformées et dimensionnées de façon à être reçues respectivement dans les rainures 2640 et 2650 des profilés supports 264, respectivement 265, comme cela apparaît mieux sur la figure 3.

En outre, lorsque le rail de guidage 5 est monté dans ces profilés 264, 265, l'orifice 53 débouche en direction de l'ouverture 27 de la portière avant.

La ou les tête(s) 42 du patin de guidage 4 sont engagées dans la partie concave, c'est-à-dire dans la cavité 52 du rail 5, de façon que le pied 41 traverse l'orifice 53, (voir figure 3). Ainsi quelle que soit la position de la vitre 28, celle-ci est toujours guidée relativement au montant 23 et donc au cadre 21. Lors du montage la tête 42 du patin est introduite dans la cavité 52 par l'une des extrémités du rail 5.

De façon avantageuse, ce rail de guidage 5 comprend un revêtement intérieur 56, qui garnit la paroi interne de la cavité 52. Ce revêtement 56 et le rail de guidage 5 sont réalisés dans deux matières plastiques, flexibles, de préférence de natures différentes. Le matériau constituant le revêtement intérieur 56 est un matériau à faible coefficient de frottement qui favorise le coulissement du patin 4. Il s'agit par exemple de polytétrafluoroéthylène PTFE.
De façon avantageuse, le matériau constituant le rail de guidage 5 est choisi parmi un matériau élastomère caoutchouc et/ou élastomère thermoplastique. De préférence encore, ce matériau est choisi parmi un composé à base de graphite, un composé à base de bisulfure de molybdène, le polyacétal, le polyamide, le polytétrafluoroéthylène PTFE, le polyéthylène à ultra haut poids moléculaire, le polypropylène ou une polyoléfine. Ces matériaux peuvent être chargés ou non.

On notera que dans certains cas, le matériau constituant le rail 5 et le patin de guidage 4 peuvent être les mêmes. Le comportement rigide du patin et celui élastiquement déformable du rail 5 sont alors liées à la forme de ces éléments.

De façon avantageuse, le rail de guidage 5 et son revêtement 56 sont co-extrudés. Ils peuvent également être moulés ou bi-injectés, voire même extrudés mono-matière lorsqu'ils sont réalisés dans le même matériau. Ceci permet de produire de grandes quantités de rails de guidage 5, qui sont ensuite découpés à la longueur souhaitée au moment de leur insertion à l'intérieur du montant 23. Le coût de production s'en trouve diminué.

Le matériau constituant le rail de guidage 5 (y compris son revêtement 56 s'il est présent) étant flexible, c'est-à-dire élastiquement déformable, ce rail peut être monté en insérant les languettes 54, respectivement 55, dans les rainures 2640, respectivement 2650, par déformation et en force. De plus, ce rail qui est produit sous forme d'un profilé rectiligne est suffisamment souple dans sa hauteur pour se conformer aux différents galbes du montant de porte selon les directions : longitudinale en x, transversale en y et en hauteur z du véhicule, en autorisant ainsi des torsions. Ce rail 5 peut également s'adapter aux tolérances de fabrication de ces montants.

Par ailleurs, le choix du matériau du rail de guidage 5 (y inclus son revêtement 56) combiné à sa section en C font que ce rail enserre la tête de guidage 42 en permanence. Ainsi les extrémités libres 422 des parties planes 420 sont en appui en permanence contre la paroi intérieure de la cavité 42. Ceci permet de maintenir la tête 42 (et donc le patin de guidage 4) selon les axes x et y d'obtenir l'isostatisme du patin.

Le rail 5 est également suffisamment souple pour assurer le coulissement du patin 4 dans tous les cas de tolérances tout en permettant un montage "flush" ou affleurant. Ainsi, l'écart entre le plan P1 de la face extérieure de la vitre 28 et le plan P2 de la face extérieure de l'appliqué 261a (ou plus généralement du montant 23) est inférieur à 1 mm. (Sur la figure 3, cet écart est nul).

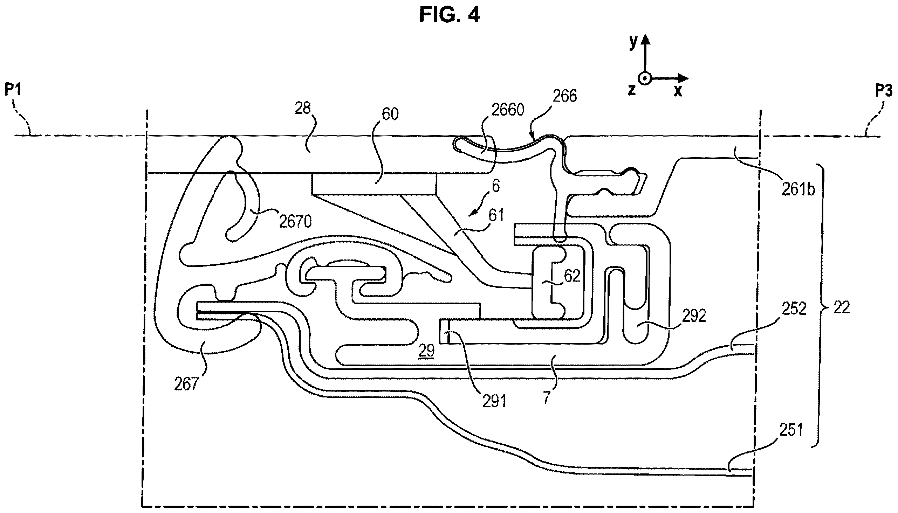

La vitre 28 est également guidée le long du montant avant 22. Ce guidage va maintenant être décrit plus en détail en faisant référence à la figure 4.

Le montant avant 22 comprend le profilé structurel interne 251, le profilé structurel médian 252 qui font partie de l'encadrement 25 et un appliqué 261b.

Un joint d'étanchéité de vitre 266 est fixé sur le bord arrière de l'appliqué 261b et comprend une lèvre longitudinale 2660 destinée à venir appuyer de manière étanche sur la tranche verticale de la vitre 28.

Un joint d'étanchéité de vitre 267 est fixé sur l'extrémité orientée vers l'arrière des profilés structurels251 et 252. Il présente une lèvre 2670 destinée à glisser contre la surface intérieure de la vitre 28.

Un profilé de support 29 est fixé, par exemple par vissage, au profilé structurel médian 252.

Ce profilé de support 29 présente une première rainure longitudinale 291 et une deuxième rainure longitudinale 292.

La première rainure 291 est conformée de façon à s'étendre sensiblement selon l'axe longitudinal du véhicule et à déboucher vers l'avant de celui-ci.

La deuxième rainure 292 présente une section transversale en "L". elle s'étend transversalement par rapport au véhicule et débouche vers l'arrière de celui-ci.

Au moins un patin de guidage 6 est fixé sur la face intérieure de la vitre 28. Ce patin de guidage 6 comprend une plaque d'appui 60 destinée à être fixée, par exemple par collage, sur la face interne de la vitre 28. Cette plaque d'appui 60 se prolonge par un pied 61, qui se prolonge lui-même par une extrémité libre formant tête 62. Cette tête 62 présente ici en section transversale une forme en "U" à courtes branches.

La tête 62 du patin de guidage 6 est reçue dans un rail de guidage 7, qui va maintenant être décrit plus en détail, en liaison avec la figure 7.

De façon similaire à ce qui a déjà été décrit pour le rail de guidage 5, le rail 7 se présente sous forme d'un profilé continu d'axe longitudinal X1-X'1. Il comprend une partie concave 71 dont la cavité longitudinale 72 débouche sur un orifice 73 qui s'étend tout le long dudit rail.

La tête 62 du patin de guidage 6 coulisse à l'intérieur de la cavité 72.

Le rail 7 comprend au moins un organe de fixation (ici deux) sur le profilé de support 29,par exemple sous forme de deux languettes longitudinales 74, 75, qui s'étendent tout le long de ce rail de guidage. La cavité 72 présente en section transversale la forme d'un "U".

La languette 75 s'étend dans le prolongement de l'une des branches du "U" formant la cavité 72. La languette 74 en "L" s'étend depuis le fond de la cavité 72, c'est-à-dire une zone du profilé située à l'opposé de l'ouverture longitudinale 73.

Les languettes 74 et 75 sont dimensionnées et formées de façon à être reçues respectivement dans la deuxième rainure 292 et la première rainure 291 du profilé de support 29.

Lorsque ce rail de guidage 7 est inséré dans le montant avant 22, il est disposé de façon à ce que la cavité 72 s'ouvre en direction de l'ouverture 27 de la porte.

Un revêtement intérieur 76 à faible coefficient de frottement est prévu sur la paroi interne de la cavité 72.

Les matériaux constitutifs du rail 7 et du revêtement 76 sont choisis parmi les mêmes matériaux que ceux constituant respectivement le rail 5 et le revêtement 56.

Le rail 7 et son revêtement 76 sont avantageusement co-extrudés ou moulés ou bi-injectés ou moulés mono-matière.

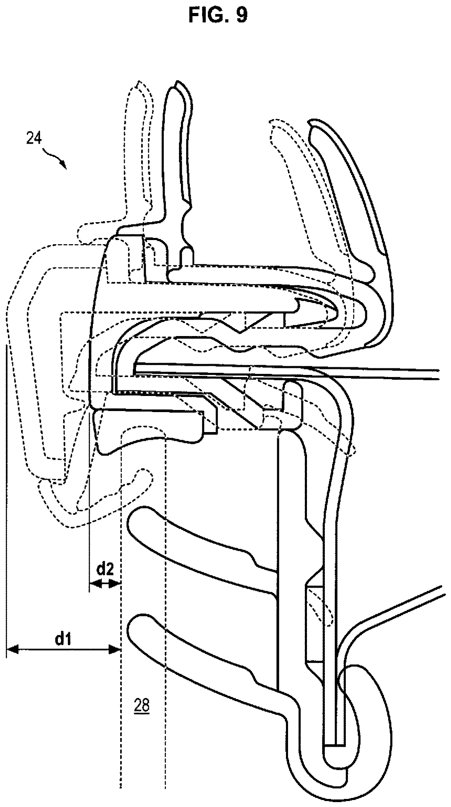

Le rail de guidage 7 et le patin de guidage 6 sont dimensionnés et positionnés de façon que, lorsque le rail 7 se trouve dans le montant 22, l'écart entre le plan P1 de la face extérieure de la vitre 28 et le plan P3 de la face extérieure de l'appliqué 261b (ou plus généralement du montant 23) est inférieur à 1 mm. (Sur la figure 4, cet écart est nul).Un avantage supplémentaire de l'invention apparaît sur la figure 9. Le montage de la vitre 28 dans les montants 22 et 23 en utilisant le rail de guidage 5 conforme à l'invention et un rail tel que le rail avant 7 permet de positionner la vitre 28 en position affleurante, comme mentionné précédemment. De ce fait, la vitre 28 se retrouve également affleurante à la traverse 24.

Sur la figure 9, on peut voir en pointillés la position de la traverse 24 selon l'état de la technique, en l'absence de l'utilisation des rails de guidage 5 et 7.

En traits pleins, on peut voir la position de la traverse 24 avec le nouveau montage.

Ainsi, selon l'état de la technique, la distance entre la face extérieure de la vitre 23 et la surface externe de la traverse 24 avait une valeur d1. Cette distance a désormais une valeur d2 inférieure à d1.

Le guidage de la vitre 38 de la porte arrière 3 ne sera pas décrit plus en détails. Il est réalisé en utilisant pour le montant avant 32, le rail de guidage 5, décrit précédemment et monté dans le montant arrière 23 et pour le montant arrière 33, par exemple le rail de guidage 7, décrit précédemment et monté dans le montant avant 22.

## Revendications

1. Dispositif de guidage d'une vitre coulissante (28, 38) dans une porte vitrée (2,3) à vitre affleurante d'un véhicule automobile qui comprend un caisson (20, 30) prolongé par un cadre (21, 31), ce cadre et ce caisson délimitant ensemble une ouverture (27, 37) à l'intérieur de laquelle coulisse ladite vitre (28, 38), ce dispositif de guidage comprenant un rail de guidage (5) destiné à être inséré et retenu dans l'un des montants (23, 32) du cadre (21, 31) de la porte et au moins un patin de guidage (4) destiné à être fixé sur la face intérieure de ladite vitre coulissante (28, 38), ledit rail de guidage (5) se présentant sous forme d'un profilé réalisé dans un matériau élastomère flexible et élastiquement déformable, ce profilé étant muni d'une cavité longitudinale cylindrique (52) débouchant sur une fente longitudinale (53), qui s'étend tout le long dudit rail, ledit patin de guidage (4) comprenant au moins une tête de guidage (42) engagée dans ladite cavité longitudinale (52) au travers de ladite fente, ledit patin de guidage étant rigide, **caractérisé en ce que** la tête de guidage (42) comprend au moins trois, de préférence quatre, parties planes (420) rigides, qui s'étendent radialement depuis ladite tête de guidage (42) et depuis un axe (421), dit "axe de la tête de patin" en étant réparties uniformément autour de celui-ci et **en ce que** ledit rail de guidage (5) d'une part enserre ladite tête de guidage (42), de sorte que les extrémités libres (422) de chaque partie plane (420) de la tête de guidage (42) sont en permanence en appui contre la paroi intérieure de ladite cavité longitudinale (52), de façon à assurer le maintien dudit patin de guidage (4) tout en autorisant son coulissement axial dans ledit rail de guidage (5) et d'autre part permet le montage du rail (5) sur toute partie galbée dudit cadre de porte.

2. Dispositif de guidage selon la revendication 1, **caractérisé en ce que** ledit rail de guidage (5) est réalisé dans un matériau élastomère caoutchouc et/ou élastomère thermoplastique.

3. Dispositif de guidage selon la revendication 2, **caractérisé en ce que** ledit rail de guidage (5) est réalisé dans un matériau choisi parmi un composé à base de graphite, un composé à base de bisulfure de molybdène, l'éthylène-propylène-diène monomère EPDM, le polyacétal, le polyamide, le polytétrafluoroéthylène PTFE, le polyéthylène à ultra haut poids moléculaire, le polypropylène ou une polyoléfine.

4. Dispositif de guidage selon l'une quelconque des revendications précédentes, **caractérisé en ce que** ledit patin de guidage (4) est réalisé dans un matériau élastomère thermoplastique.

5. Dispositif de guidage selon la revendication 4, **caractérisé en ce que** ledit patin de guidage (4) est réalisé dans un matériau choisi parmi un composé à base de graphite, un composé à base de bisulfure de molybdène, le polyacétal, le polyamide, le polytétrafluoroéthylène PTFE, le polyéthylène à ultra haut poids moléculaire, le polypropylène ou une polyoléfine.

6. Dispositif de guidage selon l'une des revendications précédentes, **caractérisé en ce que** la paroi interne de la cavité cylindrique (52) du rail de guidage (5) est recouverte d'un revêtement intérieur à faible coefficient de frottement favorisant le coulissement.

7. Dispositif de guidage selon la revendication 6, **caractérisé par le fait que** le rail de guidage (5) et son revêtement intérieur (56) sont co-extrudés.

8. Dispositif de guidage selon l'une des revendications précédentes, **caractérisé en ce que** le patin de guidage (4) comprend deux têtes de guidage (42) coaxiales selon ledit axe de patin (421) de la tête de patin.

9. Dispositif de guidage selon la revendication 8, **caractérisé en ce que** chaque tête de guidage (4) est en forme ovoïde dont le grand axe correspond audit axe de patin (421) de la tête de patin.

10. Dispositif de guidage selon la revendication 8 ou 9, **caractérisé en ce que** les parties planes (420) de l'une des deux têtes de guidage (42) sont décalées angulairement par rapport aux parties planes (420) de l'autre tête (42).

11. Dispositif de guidage selon l'une des revendications précédentes, **caractérisé en ce que** ledit rail de guidage (5) comprend au moins un organe de fixation (54, 55) sur le montant, tel qu'une languette longitudinale s'étendant tout le long dudit rail de guidage (5), cet organe étant conformé pour pouvoir être reçu dans une rainure longitudinale du montant du cadre de la porte.

12. Porte vitrée (2,3) à vitre affleurante de véhicule automobile (1), comprenant un caisson (20, 30) qui se prolonge par un cadre (21, 31), ce cadre et ce caisson délimitant ensemble une ouverture (27, 37), ladite porte comprenant également une vitre coulissante (28, 38), mobile entre une position fermée dans laquelle elle obture complètement ladite ouverture (27, 37) et une position ouverte dans laquelle elle est au moins partiellement engagée dans ledit caisson et dégage au moins partiellement ladite ouverture (27, 37), ledit cadre (21, 31) comportant deux montants avant (22, 32) et arrière (23, 33) reliés entre eux par une traverse (24, 34), **caractérisée en ce qu'elle** comprend un dispositif de guidage d'une vitre selon l'une des revendications précédentes, **en ce que** ledit patin de guidage (4) est fixé sur la vitre affleurante (28, 38) de ladite porte, **en ce que** le rail de guidage (5) est monté dans l'un desdits montants de façon que ladite fente longitudinale (53) débouche en direction de ladite ouverture (27, 37) et **en ce que** ledit rail (5) et ledit patin (4) sont dimensionnés et positionnés de façon que la vitre (28, 38) soit affleurante.

13. Porte vitrée selon la revendication 12, **caractérisée par le fait qu'**il s'agit d'une porte avant (2) de véhicule et **par le fait que** ledit rail de guidage (5) est fixé sur le montant arrière (23) du cadre (21).

14. Porte vitrée selon la revendication 12, **caractérisée par le fait qu'**il s'agit d'une porte arrière (3) de véhicule et **par le fait que** ledit rail de guidage (5) est fixé sur le montant avant (32) du cadre (31).

15. Véhicule automobile, **caractérisé en ce qu'**il comprend au moins une porte vitrée à vitre affleurante selon l'une des revendications 12 à 14.

## Patentansprüche

1. Vorrichtung zum Führen einer Schiebescheibe (28, 38) in einer verglasten Tür (2, 3) mit bündiger Scheibe eines Kraftfahrzeugs, die einen von einem Rahmen (21, 31) verlängerten Kasten (20, 30) umfasst, wobei dieser Rahmen und dieser Kasten gemeinsam eine Öffnung (27, 37) begrenzen, in der die Scheibe (28, 38) gleitet, wobei diese Führungsvorrichtung eine Führungsschiene (5) umfasst, die bestimmt ist, in einen der Pfosten (23, 32) des Rahmens (21, 31) der Tür eingesetzt zu sein und gehalten zu werden, und mindestens einen Führungsfuß (4), der bestimmt ist, auf der inneren Fläche der Schiebescheibe (28, 38) befestigt zu sein, wobei die Führungsschiene (5) in Form eines Profils vorliegt, das aus einem flexiblen und elastisch verformbaren Elastomermaterial hergestellt ist, wobei dieses Profil mit einem zylindrischen länglichen Hohlraum (52) versehen ist, der über einen länglichen Schlitz (53) ausmündet, der sich über die gesamte Länge der Schiene erstreckt, wobei der Führungsfuß (4) mindestens einen Führungskopf (42) umfasst, der in den länglichen Hohlraum (52) durch den Schlitz eingreift, wobei der Führungsfuß starr ist, **dadurch gekennzeichnet, dass** der Führungskopf (42) mindestens drei, vorzugsweise vier starre ebene Teile (420) umfasst, die sich radial ab dem Führungskopf (42) und ab einer Achse (421), bezeichnet als "Achse des Fußkopfs", erstrecken, indem sie gleichmäßig um diese verteilt sind und dass die Führungsschiene (5) zum einen den Führungskopf (42) derart umschließt, dass sich die freien Enden (422) jedes ebenen Teils (420) des Führungskopfs (42) ständig auf der Innenwand des länglichen Hohlraums (52) derart abstützen, dass der Halt des Führungsfußes (4) gesichert ist und gleichzeitig sein axiales Gleiten in der Führungsschiene (5) erlaubt wird und zum anderen die Montage der Schiene (5) auf dem gesamten gewölbten Teil des Türahmens gestattet ist.

2. Führungsvorrichtung nach Anspruch 1, **dadurch gekennzeichnet, dass** die Führungsschiene (5) aus einem Gummielastomer- und/oder einem thermoplastischen Elastomermaterial hergestellt ist.

3. Führungsvorrichtung nach Anspruch 2, **dadurch gekennzeichnet, dass** die Führungsschiene (5) aus einem Material hergestellt ist, das aus einer Verbindung auf der Basis von Graphit, einer Verbindung auf der Basis von Molybdändisulfid, Ethylen-Propylen-Dien-Kautschuk EPDM, Polyacetal, Polyamid, Polytetrafluorethylen PTFE, Polyethylen mit ultrahohem Molekulargewicht, Polypropylen oder einem Polyolefin ausgewählt ist.

4. Führungsvorrichtung nach einem der vorangehenden Ansprüche, **dadurch gekennzeichnet, dass** der Führungsfuß (4) aus einem thermoplastischen Elastomermaterial hergestellt ist.

5. Führungsvorrichtung nach Anspruch 4, **dadurch gekennzeichnet, dass** der Führungsfuß (4) aus einem Material hergestellt ist, das aus einer Verbindung auf der Basis von Graphit, einer Verbindung auf der Basis von Molybdändisulfid, Polyacetal, Polyamid, Polytetrafluorethylen PTFE, Polyethylen mit ultrahohem Molekulargewicht, Polypropylen oder einem Polyolefin ausgewählt ist.

6. Führungsvorrichtung nach einem der vorangehenden Ansprüche, **dadurch gekennzeichnet, dass** die Innenwand des zylindrischen Hohlraums (52) der Führungsschiene (5) mit einer Innenbeschichtung mit niedrigem Reibungskoeffizienten bedeckt ist, was das Gleiten fördert.

7. Führungsvorrichtung nach Anspruch 6, **dadurch gekennzeichnet, dass** die Führungsschiene (5) und ihre Innenbeschichtung (56) koextrudiert sind.

8. Führungsvorrichtung nach einem der vorangehenden Ansprüche, **dadurch gekennzeichnet, dass** der Führungsfuß (4) zwei gemäß der Fußachse (421) des Fußkopfs koaxiale Führungsköpfe (42) umfasst.

9. Führungsvorrichtung nach Anspruch 8, **dadurch gekennzeichnet, dass** jeder Führungskopf (4) in Form eines Eis ist, dessen große Achse der Fußachse (421) des Fußkopfs entspricht.

10. Führungsvorrichtung nach Anspruch 8 oder 9, **dadurch gekennzeichnet, dass** die ebenen Teile (420) vom einem der zwei Führungsköpfe (42) im Verhältnis zu den ebenen Teilen (420) des anderen Kopfs (42) winklig versetzt sind.

11. Führungsvorrichtung nach einem der vorangehenden Ansprüche, **dadurch gekennzeichnet, dass** die Führungsschiene (5) mindestens ein Befestigungsorgan (54, 55) auf dem Pfosten wie eine Längslasche umfasst, das sich entlang der gesamten Führungsschiene (5) erstreckt, wobei dieses Organ ausgebildet ist, um in einer Längsrille des Pfostens des Rahmens der Tür empfangen zu werden.

12. Verglaste Tür (2, 3) mit bündiger Scheibe eines Kraftfahrzeugs (1), die einen von einem Rahmen (21, 31) verlängerten Kasten (20, 30) umfasst, wobei dieser Rahmen und dieser Kasten gemeinsam eine Öffnung (27, 37) begrenzen, wobei die Tür ebenfalls eine Schiebescheibe (28, 38) umfasst, die zwischen einer geschlossenen Position, in welcher sie die Öffnung (27, 37) vollständig verschließt, und einer offenen Position, in welcher sie mindestens teilweise in den Kasten eingreift und die Öffnung (27, 37) mindestens teilweise freigibt, beweglich ist, wobei der Rahmen (21, 31) zwei vordere (22, 32) und hintere (23, 33) Pfosten aufweist, die mit einem Querträger (24, 34) miteinander verbunden sind, **dadurch gekennzeichnet, dass** sie eine Führungsvorrichtung einer Scheibe nach einem der vorangehenden Ansprüche umfasst, dass der Führungsfuß (4) auf der bündigen Scheibe (28, 38) der Tür befestigt ist, dass die Führungsschiene (5) in einem der Pfosten derart angebracht ist, dass der längliche Schlitz (53) in Richtung der Öffnung (27, 37) ausmündet und dass die Schiene (5) und der Fuß (4) derart bemessen und positioniert sind, dass die Scheibe (28, 38) bündig ist.

13. Verglaste Tür nach Anspruch 12, **dadurch gekennzeichnet, dass** es sich um eine vordere Tür (2) eines Fahrzeugs handelt und dass die Führungsschiene (5) am hinteren Pfosten (23) des Rahmens (21) befestigt ist.

14. Verglaste Tür nach Anspruch 12, **dadurch gekennzeichnet, dass** es sich um eine hintere Tür (3) eines Fahrzeugs handelt und dass die Führungsschiene (5) am vorderen Pfosten (32) des Rahmens (31) befestigt ist.

15. Kraftfahrzeug, **dadurch gekennzeichnet, dass** es mindestens eine verglaste Tür mit bündiger Scheibe nach einem der Ansprüche 12 bis 14 umfasst.

## Claims

1. A device for guiding a sliding window (28, 38) in a glazed door (2,3) with a flush window of a motor vehicle, comprising a panel (20, 30) extended by a frame (21, 31), this frame and this panel together delimiting an opening (27, 37) inside which said window (28, 38) slides, this guiding device comprising a guide rail (5) intended to be inserted and retained in one of the uprights (23, 32) of the frame (21, 31) of the door and at least one guide shoe (4) intended to be attached to the inner face of said sliding window (28, 38), said guide rail (5) taking the form of a profile made of a flexible and elastically deformable elastomer material, provided with a cylindrical longitudinal recess (52) opening onto a longitudinal slot (53), which extends the entire length of said rail, said guide shoe (4) comprising at least one guiding head (42) engaged in said longitudinal recess (52) through said slot, said guide shoe (4) being rigid, **characterized in that** the guiding head (42) comprises at least three, preferably four, flat rigid parts (420) extending radially from said guiding head (42) and from an axis (421) named "axis of the shoe head", while being evenly distributed about the latter and **in that** said guide rail (5) on the one hand surrounds said guiding head (42), so that the free ends (422) of each flat part (420) of the guiding head (42) are constantly bearing against the inner wall of said longitudinal recess (52), so as to hold said guide shoe (4) while permitting its axial sliding in said guide rail (5) and on the other hand allows the mounting of the rail (5) on any curved part of said door frame.

2. The guiding device as claimed in claim 1, **characterized in that** said guide rail (5) is made of a rubber elastomer and/or thermoplastic elastomer material.

3. The guiding device as claimed in claim 2, **characterized in that** said guide rail (5) is made of a material chosen from among a graphite-based composite, a molybdenum disulfide-based composite, ethylene propylene diene monomer EPDM, polyacetal, polyamide, polytetrafluoroethylene PTFE, ultra-high-molecular-weight polyethylene, polypropylene or a polyolefin.

4. The guiding device as claimed in any of the preceding claims, **characterized in that** said guide shoe (4) is made of a thermoplastic elastomer material.

5. The guiding device as claimed in claim 4, **characterized in that** said guide shoe (4) is made of a material chosen from among a graphite-based composite, a molybdenum disulfide-based composite, polyacetal, polyamide, polytetrafluoroethylene PTFE, ultra-high-molecular-weight polyethylene, polypropylene or a polyolefin.

6. The guiding device as claimed in any of the preceding claims, **characterized in that** the inner wall of the cylindrical recess (52) of the guide rail (5) is covered with an inner coating with a low frictional coefficient promoting sliding.

7. The guiding device as claimed in claim 6, **characterized by** the fact that the guide rail (5) and its inner coating (56) are co-extruded.

8. The guiding device as claimed in any of the preceding claims, **characterized in that** the guide shoe (4) comprises two guiding heads (42) coaxial along said shoe axis (421) of the shoe head.

9. The guiding device as claimed in claim 8, **characterized in that** each guiding head (4) is of ovoid shape, the major axis of which corresponds to said shoe axis (421) of the shoe head.

10. The guiding device as claimed in claim 8 or 9, **characterized in that** the flat parts (420) of one of the two guiding heads (42) are angularly offset with respect to the flat parts (420) of the other head (42).

11. The guiding device as claimed in any of the preceding claims, **characterized in that** said guide rail (5) comprises at least one member (54, 55) for attaching to the upright, such as a longitudinal tab extending the entire length of said guide rail (5), this member being shaped to be able to be received in a longitudinal groove of the upright of the door frame.

12. A glazed door (2,3) with a flush window of a motor vehicle (1), comprising a panel (20, 30) which is extended by a frame (21, 31), this frame and this panel together delimiting an opening (27, 37), said door also comprising a sliding window (28, 38), movable between a closed position wherein it completely shuts said opening (27, 37) and an open position wherein it is at least partly engaged in said panel and at least partly clears said opening (27, 37), said frame (21, 31) including two front (22, 32) and rear (23, 33) uprights mutually connected by a crossbar (24, 34), **characterized in that** it comprises a device for guiding a window as claimed in one of the preceding claims, **in that** said guide shoe (4) is attached to the flush window (28, 38) of said door, **in that** the guide rail (5) is mounted in one of said uprights so that said longitudinal slot (53) opens in the direction of said opening (27, 37) and **in that** said rail (5) and said shoe (4) are dimensioned and positioned so that the window (28, 38) is flush.

13. The glazed door as claimed in claim 12, **characterized by** the fact that it is a front vehicle door (2) and by the fact that said guide rail (5) is attached to the rear upright (23) of the frame (21).

14. The glazed door as claimed in claim 12, **characterized by** the fact that it is a rear vehicle door (3) and by the fact that said guide rail (5) is attached to the front upright (32) of the frame (31).

15. A motor vehicle, **characterized in that** it comprises at least one glazed door with a flush window as claimed in one of claims 12 to 14.
